# EUROPÄISCHE PATENTSCHRIFT

(11) **EP 3 234 429 B1**
(45) Veröffentlichungstag und Bekanntmachung des Hinweises auf die Patenterteilung: **24.10.2018**
(21) Anmeldenummer: 15793812.7
(22) Anmeldetag: 11.11.2015
(51) Int. Cl.: F16K 31/40, F16K 31/06

(54) **VENTILEINRICHTUNG**
VALVE DEVICE
SYSTÈME DE SOUPAPES

(30) Priorität: 16.12.2014 DE 102014226064
(43) Veröffentlichungstag der Anmeldung: 25.10.2017
(73) Patentinhaber: Robert Bosch GmbH, 70442 Stuttgart (DE)
(72) Erfinder: RIEGLER, Udo, 70439 Stuttgart (DE)
(74) Vertreter: Maiß, Harald
(86) Internationale Anmeldenummer: PCT/EP2015/076302
(87) Internationale Veröffentlichungsnummer: WO 2016/096256

(56) Entgegenhaltungen:
- DE-A1- 19 801 363
- DE-A1-102005 014 100
- DE-A1-102008 020 855
- KR-A- 20130 065 594
- US-A- 3 405 906

## Beschreibung

Die Erfindung betrifft eine Ventileinrichtung mit einem Hauptventil und einem Vorsteuerventil, das einen Schließkörper umfasst, der mit einem Anker betätigbar ist, um einen ersten Druckanschluss der Ventileinrichtung mit einem zweiten Druckanschluss der Ventileinrichtung zu verbinden, wobei der Anker an einem dem Schließkörper des Vorsteuerventils abgewandten Ende durch eine Ankerfedereinrichtung beaufschlagt ist, die in einer axialen Richtung zwischen einem Polrohr und dem Anker eingespannt ist.

### Stand der Technik

Bei der Ventileinrichtung handelt es sich zum Beispiel um ein Hauptstromventil in einem Hydraulikhybridantriebsstrang eines Kraftfahrzeugs. In dem Hydraulikhybridantriebsstrang ist wenigstens eine Hydraulikmaschine, die auch als Hydrostat bezeichnet wird, an den ersten Druckanschluss der Ventileinrichtung angeschlossen. Die Hydraulikmaschine kann direkt oder über weitere hier nicht angeführte Hydraulikkomponenten, in einem Sonderfall auch über eine weitere vergleichbare Ventileinrichtung, an den ersten Druckanschluss der Ventileinrichtung angeschlossen sein. An den zweiten Druckanschluss der Ventileinrichtung ist ein hydraulischer Druckspeicher angeschlossen. Der hydraulische Druckspeicher kann direkt oder über weitere hier nicht angeführte Hydraulikkomponenten an den zweiten Druckanschluss der Ventileinrichtung angeschlossen sein. Normalerweise ist der Druck in dem hydraulischen Druckspeicher, also am zweiten Druckanschluss, größer als an einem Ausgang der Hydraulikmaschine, also dem ersten Druckanschluss, der umgekehrte Fall ist jedoch genauso möglich, entsprechend der gewählten Betriebsstrategie des Hydraulikhybridantriebsstrangs. Durch Bestromen einer Magneteinrichtung wird das Hauptventil über das Vorsteuerventil geöffnet, wobei ein Dichtelement aus seiner Schließstellung in eine Öffnungsstellung bewegt wird. Wenn die Magneteinrichtung nicht bestromt wird, dann ist das Dichtelement, zum Beispiel durch eine Schließfeder, in seine Schließstellung vorgespannt. Der umgekehrte Fall ist ebenfalls möglich.

Aus der DE 10 2005 014 100 A1 ist eine Ventilanrichtung gemäß dem Oberbegriff von Anspruch 1 bekannt. Aus der US 3 405 906 A, der DE 10 2008 020 855 A1, der KR 2013-0065594 A und der DE 198 01 363 A1 sind weitere Ventileinrichtungen bekannt.

### Offenbarung der Erfindung

Aufgabe der Erfindung ist es, eine Ventileinrichtung gemäß dem Oberbegriff des Anspruchs 1 zu schaffen, die einfach aufgebaut und kostengünstig herstellbar ist.

Die Aufgabe ist bei einer Ventileinrichtung mit einem Hauptventil und einem Vorsteuerventil, das einen Schließkörper umfasst, der mit einem Anker betätigbar ist, um einen ersten Druckanschluss der Ventileinrichtung mit einem zweiten Druckanschluss der Ventileinrichtung zu verbinden, wobei der Anker an einem dem Schließkörper des Vorsteuerventils abgewandten Ende durch eine Ankerfedereinrichtung beaufschlagt ist, die in einer axialen Richtung zwischen einem Polrohr und dem Anker eingespannt ist, wobei der Anker ein Ankerteil aufweist, das nach einem Ankerfreiweg über eine Mitnehmereinrichtung des Ankers betätigbar ist dadurch gelöst, dass die Ankerfeder mindestens zwei Ankerhubbereiche mit zwei unterschiedlichen Federsteifigkeiten darstellt. Zur Darstellung der zwei Ankerhubbereiche mit zwei unterschiedlichen Federsteifigkeiten kann die Ankerfedereinrichtung zum Beispiel eine Ankerfeder mit einer progressiven Federsteifigkeit umfassen. Die Ankerfeder kann aber auch zwei Ankerfedern mit unterschiedlichen Federsteifigkeiten umfassen. Die Betätigung des Ankers erfolgt vorzugsweise durch eine Magneteinrichtung, die zum Beispiel eine elektromagnetische Spule umfasst. Bei der erfindungsgemäßen Ventileinrichtung handelt es sich vorzugsweise um ein Hauptstromventil, das zum Beispiel in einem Hydraulikhybridantriebsstrang Anwendung findet. An dem zweiten Druckanschluss herrscht normalerweise ein höherer Druck als an dem ersten Druckanschluss. Durch Bestromung eines Elektromagneten der Magneteinrichtung kann der Schließkörper des Vorsteuerventils von einem Ventilsitz abgehoben werden, um einen Öffnungsquerschnitt des Vorsteuerventils freizugeben. Durch den damit verbundenen Druckabfall in einem zwischen dem zweiten Druckanschluss und dem ersten Druckanschluss angeordneten Steuerraum wird ein Öffnen des Hauptventils bewirkt, so dass mit Druck beaufschlagtes Fluid von dem zweiten Druckanschluss zu dem ersten Druckanschluss strömt. Die Erfindung betrifft insbesondere Ventileinrichtungen, bei denen ein Ventilkolben des Hauptventils gemäß einem sogenannten Folgekolbenprinzip mit dem Schließkörper des Vorsteuerventils gekoppelt ist. Die Erfindung ist aber, je nach Ausführungsbeispiel, auch im Zusammenhang mit Ventileinrichtungen anwendbar, die nicht gemäß dem Folgekolbenprinzip aufgebaut sind. Der Anker ist vorzugsweise über die mechanische Mitnehmereinrichtung mit dem Schließkörper des Vorsteuerventils gekoppelt. Die mechanische Mitnehmereinrichtung dient vorteilhaft dazu, nach dem Überwinden des Ankerfreiwegs eine Mitnahme des Schließkörpers mit dem Anker zu ermöglichen. Nach dem Überwinden des Ankerfreiwegs ist die Öffnungsbewegung des Schließkörpers mit der Bewegung des Ankers gekoppelt. Durch die erfindungsgemäße Gestaltung der Ankerfedereinrichtung kann die zur Verfügung stehende Ankerfederschließkraft gegenüber herkömmlichen Anwendungen deutlich erhöht werden. Dadurch kann auf einfache Art und Weise sichergestellt werden, dass das Vorsteuerventil schließt, wenn die Bestromung der Magneteinrichtung unterbrochen wird. Wenn die betriebsbedingte Restmagnetisierungskraft ausreichend gering ist, kann besonders vorteilhaft auf den Einsatz einer Restluftspaltscheibe verzichtet werden. Eine Ersatzsteifigkeit der erfindungsgemäßen Ankerfedereinrichtung kann geringer als bei herkömmlichen Anwendungen ausgelegt werden. Dadurch reduzieren sich die Anforderungen an die für einen ordnungsgemäßen Betrieb der Ventileinrichtung benötigte Magnetkraft. Ein kritischer beziehungsweise maximal möglicher Ankerhub bezüglich Nichtöffnen des Vorsteuerventils, das auch als Pilotventil bezeichnet wird, kann vorteilhaft zu höheren Ankerhüben oder äquivalent zu einem niedrigeren Wert des Anzugsstroms verschoben werden. Gleichzeitig wird die Aufprallgeschwindigkeit der Ankerbaugruppe, gegebenenfalls inklusive Mitnehmereinrichtung, auf den Ventilsitz des Vorsteuerventils reduziert. Dadurch können der im Betrieb auftretende Verschleiß reduziert und die Lebensdauer der Ventileinrichtung verlängert werden. Als Remanenzkraft wird eine Kraft bezeichnet, die bei einer realen Magneteinrichtung übrig bleibt, wenn die Bestromung unterbrochen wird. Die Remanenzkraft oder Restmagnetisierungskraft kann so hoch sein, dass der Anker in seiner Öffnungsposition im Polrohr verbleibt und das Vorsteuerventil nicht schließt. Dieser Vorgang wird auch als magnetisches Kleben bezeichnet. Je nach Ausführung ist die Magnetkraft nicht viel größer als die Remanenzkraft. Dann besteht die Gefahr, dass die Ankerfederkraft nicht ausreicht, um die Remanenzkraft zu überwinden. Durch die erfindungsgemäße Ankerfedereinrichtung mit den mindestens zwei unterschiedlichen Federsteifigkeiten kann die Remanenzkraft sicherer und schneller überwunden werden als bei herkömmlichen Ventileinrichtungen.

Ein bevorzugtes Ausführungsbeispiel der Ventileinrichtung ist dadurch gekennzeichnet, dass mindestens zwei Ankerfedern so in Reihe geschaltet sind, dass der durch die Ankerfedereinrichtung in eine Schließstellung vorgespannte Anker bei einer Betätigung zunächst einen unteren Ankerhub gegen eine erste Federsteifigkeit einer ersten Ankerfeder ausführt. Die Betätigung des Ankers erfolgt vorzugsweise durch Bestromen der Magneteinrichtung. Der untere Ankerhub ist vorzugweise etwas kleiner als der durch die Mitnehmereinrichtung ermöglichte Ankerfreiweg. Je nach Ausführung erfolgt der untere Ankerhub zum Beispiel von null bis zwei Millimeter.

Ein weiteres bevorzugtes Ausführungsbeispiel der Ventileinrichtung ist dadurch gekennzeichnet, dass die Ankerfedern so in Reihe geschaltet sind, dass der Anker nach dem unteren Ankerhub einen oberen Ankerhub gegen eine zweite, größere Federsteifigkeit einer zweiten Ankerfeder ausführt. Die zweite Federsteifigkeit ist vorzugsweise deutlich größer als die erste Federsteifigkeit. Die zweite Federsteifigkeit kann zum Beispiel um einen Faktor bis zu fünf größer als die erste Federsteifigkeit sein. Der obere Ankerhub nimmt zum Beispiel einen Bereich von zwei bis 3,1 Millimeter ein.

Ein weiteres bevorzugtes Ausführungsbeispiel der Ventileinrichtung ist dadurch gekennzeichnet, dass die erste Ankerfeder durch eine Kopplungseinrichtung mechanisch mit der zweiten Ankerfeder gekoppelt ist. Die Kopplungseinrichtung ist zum Beispiel als Drehteil aus Metall ausgeführt und kostengünstig herstellbar. Die Kopplungseinrichtung kann aber auch aus Kunststoff, zum Beispiel als Spritzgussteil, ausgeführt sein.

Ein weiteres bevorzugtes Ausführungsbeispiel der Ventileinrichtung ist dadurch gekennzeichnet, dass die Kopplungseinrichtung einen Bund aufweist, der zwischen den Ankerfedern eingespannt ist. Der Bund weist mindestens einen Durchgang auf, der einen Durchtritt von Fluid in axialer Richtung ermöglicht.

Ein weiteres bevorzugtes Ausführungsbeispiel der Ventileinrichtung ist dadurch gekennzeichnet, dass der Anker zur Aufnahme der Ankerfedereinrichtung eine zentrale Aufnahme mit einem Absatz aufweist, der nach Erreichen eines Ankerhubs einen mechanischen Anschlag für den Bund der Kopplungseinrichtung darstellt. Dadurch wird auf einfache Art und Weise die Darstellung der beiden Ankerhubbereiche ermöglicht. Die zentrale Aufnahme ist zum Beispiel als Sackloch in dem Schließkörper des Vorsteuerventils abgewandten Ende des Ankers ausgeführt.

Ein weiteres bevorzugtes Ausführungsbeispiel der Ventileinrichtung ist dadurch gekennzeichnet, dass der Ankerfreiweg kleiner ist als der Ankerhub zur Mitnahme der Kopplungseinrichtung durch den Anker. Der Ankerfreiweg ist kleiner als der Ankerhub, bei dem der Eingriff der Kopplungseinrichtung, bzw. des mechanischen Mitnehmers erfolgt. Der Ankerfreiweg ist beispielsweise um 0,1 bis 0,4 Millimeter, insbesondere um 0,2 Millimeter kleiner als der Ankerhub, bei dem der mechanische Eingriff der Kopplungseinrichtung erfolgt. Beispielsweise erfolgt der Eingriff der Kopplungseinrichtung ca. 0,5 Millisekunden nach dem Öffnen des Pilotventils. Zu diesem Zeitpunkt, bei der eine signifikante Erhöhung der Ankerfederkraft stattgefunden hat, ist die hydraulische Schließkraft auf das Ankerteil stark gesunken. Diese Ausführungsform ermöglicht eine Reduzierung der Gesamtschließzeit der Ventileinrichtung, insbesondere bei geringen Durchflüssen von beispielsweise 5 bis 30 Liter pro Minute.

Ein weiteres bevorzugtes Ausführungsbeispiel der Ventileinrichtung ist dadurch gekennzeichnet, dass eine Einstellscheibe zwischen dem Bund der Kopplungseinrichtung und dem Absatz an dem Anker angeordnet ist. Über die Dicke der Einstellscheibe können die Ankerhubbereiche exakt eingestellt werden.

Ein weiteres bevorzugtes Ausführungsbeispiel der Ventileinrichtung ist dadurch gekennzeichnet, dass die Kopplungseinrichtung für die zweite Ankerfeder einen Führungszapfen aufweist, der mit einem freien Ende in einer Zentrieraufnahme des Polrohrs angeordnet ist. Dadurch wird auf einfache Art und Weise eine Positionierung beziehungsweise Zentrierung der Kopplungseinrichtung relativ zu dem Polrohr ermöglicht. Die Zentrieraufnahme ist zum Beispiel als Sackloch in dem Polrohr ausgeführt. Der Führungszapfen für die zweite Ankerfeder ist vorzugsweise einstückig mit dem Bund der Kopplungseinrichtung verbunden. Gemäß einem weiteren Aspekt der Erfindung weist die Kopplungseinrichtung auch einen Führungszapfen für die erste Ankerfeder auf. Dann ist der Bund der Kopplungseinrichtung zwischen den beiden Führungszapfen angeordnet.

Ein weiteres bevorzugtes Ausführungsbeispiel der Ventileinrichtung ist dadurch gekennzeichnet, dass die Ventileinrichtung als Hauptstromventil für einen Hydraulikhybridantriebsstrang ausgeführt ist. Der Hydraulikhybridantriebsstrang umfasst mindestens eine Hydraulikmaschine, die auch als Hydrostat bezeichnet wird. Vorteilhaft umfasst der Hydraulikhybridantriebsstrang zwei Hydraulikmaschinen, die auch als Hydrostaten bezeichnet werden. An einen Ausgang der Hydraulikmaschine beziehungsweise der Hydraulikmaschinen ist ein hydraulischer Druckspeicher angeschlossen. Zwischen den Ausgang des Hydrostaten und den hydraulischen Druckspeicher ist die erfindungsgemäße Ventileinrichtung geschaltet. Die Erfindung betrifft gegebenenfalls auch einen Hydraulikhybridantriebsstrang mit einer vorab beschriebenen Ventileinrichtung. Die Erfindung betrifft des Weiteren gegebenenfalls auch ein Verfahren zum Betreiben einer vorab beschriebenen Ventileinrichtung als Hauptstromventil in einem Hydraulikhybridantriebsstrang.

Die Erfindung betrifft des Weiteren eine Ankerfedereinrichtung für eine vorab beschriebene Ventileinrichtung. Die Ankerfedereinrichtung, insbesondere eine der Ankerfedern beziehungsweise beide Ankerfedern und/oder die Kopplungseinrichtung, ist, beziehungsweise sind gegebenenfalls separat handelbar.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind.

### Kurze Beschreibung der Zeichnung

Es zeigen:
- Figur 1: einen Hydraulikschaltplan einer Ventileinrichtung mit einem Hauptventil und einem Vorsteuerventil;
- Figur 2: ein Ausführungsbeispiel einer Ventileinrichtung mit einem Hauptventil und einem Vorsteuerventil gemäß dem Folgekolbenprinzip im Längsschnitt;
- Figur 3: einen vergrößerten Ausschnitt aus Figur 2 mit einer erfindungsgemäßen Ankerfedereinrichtung zwischen einem dem Schließkörper des Vorsteuerventils abgewandten Ende des Ankers und einem Polrohr zur Veranschaulichung eines unteren Ankerhubs;
- Figur 4: die gleiche Darstellung wie in Figur 3 zur Veranschaulichung eines oberen Ankerhubs und
- Figur 5: die Ansicht eines Querschnitts durch eine Kopplungseinrichtung der Ankerfedereinrichtung aus den Figuren 3 und 4.

### Beschreibung der Ausführungsbeispiele

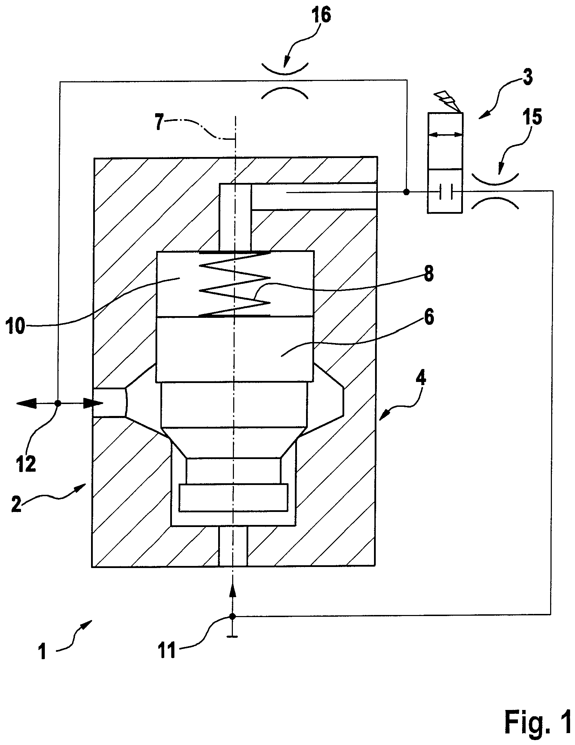

In den Figuren 1 bis 4 ist eine Ventileinrichtung 1; 21 in verschiedenen Ansichten dargestellt. Die Ventileinrichtung 1; 21 umfasst ein Hauptventil 2; 22, das je nach Ausführung auch als Rückschlagventil funktioniert, und ein Vorsteuerventil 3; 23.

Das Hauptventil 2 umfasst, wie man in Figur 1 sieht, ein in einem Gehäuse 4; 25 in axialer Richtung hin und her bewegbar geführtes Dichtelement 6. Der Begriff axial bezieht sich auf eine Längsachse 7 der Ventileinrichtung 1. Axial bedeutet in Richtung oder parallel zur Längsachse 7. Das Dichtelement 6 ist durch eine Schließfeder 8 in seine in Figur 1 dargestellte Schließstellung vorgespannt.

In seiner Schließstellung unterbricht das Dichtelement 6 eine hydraulische Verbindung zwischen einem ersten Druckanschluss 11 und einem zweiten Druckanschluss 12. Der erste Druckanschluss 11 der Ventileinrichtung 1 ist über eine erste Drosselverbindung 15 an das Vorsteuerventil 3 angeschlossen. Dabei ist das Vorsteuerventil 3 zwischen die erste Drosselverbindung 15 und einen Steuerraum 10 der Ventileinrichtung 1 geschaltet. Der zweite Druckanschluss 12 der Ventileinrichtung 1 ist über eine zweite Drosselverbindung 16 mit dem Steuerraum 10 verbunden.

Die Ventileinrichtung 1 mit den beiden Anschlüssen 11 und 12 ist als Hauptstromventil in einem Hydraulikhybridantriebsstrang (nicht dargestellt) ausgeführt. Der nicht dargestellte Hydraulikhybridantriebsstrang umfasst einen verbrennungsmotorischen Antrieb und einen hydraulischen Antrieb. Der verbrennungsmotorische Antrieb ist zum Beispiel als Brennkraftmaschine ausgeführt und wird auch als Verbrennungsmotor bezeichnet. Der hydraulische Antrieb umfasst zum Beispiel zwei Hydraulikmaschinen, die auch als Hydrostaten bezeichnet werden. Die beiden Hydrostaten oder Hydraulikmaschinen können vorteilhaft sowohl als hydraulische Pumpe als auch als hydraulischer Motor betrieben werden. Dabei können die beiden Hydraulikmaschinen zum Beispiel als hydraulische Axialkolbenmaschinen ausgeführt sein. Die beiden Hydraulikmaschinen sind über ein Hydrauliksystem hydraulisch miteinander verbindbar beziehungsweise verbunden. Das Hydrauliksystem umfasst mindestens ein Hauptstromventil, das durch die Ventileinrichtung 1; 21 dargestellt wird.

Das Hauptstromventil 1; 21 ist in dem Hydraulikhybridantriebsstrang zwischen einen Ausgang einer der Hydraulikmaschinen und einen hydraulischen Druckspeicher geschaltet. Vorteilhaft ist jeweils ein Hauptstromventil zwischen die Ausgänge der Hydraulikmaschinen und den hydraulischen Druckspeicher geschaltet. Dabei ist der Ausgang der Hydraulikmaschinen beziehungsweise des Hydrostaten an den ersten Druckanschluss 11 der Ventileinrichtung 1; 21 angeschlossen. An den zweiten Druckanschluss 12 der Ventileinrichtung 1; 21 ist der hydraulische Druckspeicher angeschlossen.

Normalerweise ist der Druck, der in dem hydraulischen Druckspeicher herrscht, größer als der Druck am Ausgang des Hydrostaten, der auch als hydraulische Maschine bezeichnet wird. Durch Öffnen der Ventileinrichtung 1; 21 wird der hydraulische Druckspeicher mit dem Eingang oder Ausgang der an die Ventileinrichtung 1; 21 angeschlossenen hydraulischen Maschine verbunden, und umgekehrt. Bei geöffneter Ventileinrichtung kann die an die Ventileinrichtung 1; 21 angeschlossene Hydraulikmaschine aus dem Druckspeicher hydraulisch angetrieben werden. Des Weiteren kann der Druckspeicher bei geöffneter Ventileinrichtung 1; 21 hydraulisch durch die an die Ventileinrichtung 1; 21 angeschlossene hydraulische Maschine aufgeladen werden.

Das Hauptventil 2; 22 wird auch als Hauptstromventil bezeichnet. Das Vorsteuerventil 3; 23 wird auch Pilotventil bezeichnet. Das Hauptventil 2 mit dem Hauptkolben oder Dichtelement 6 kann bei großem Hauptventilhub große Volumenströme nahezu verlustfrei schalten. Normalerweise ist der Druck am zweiten Druckanschluss 12, der über die zweite Drosselverbindung 16 auch in dem Steuerraum 10 herrscht, größer als der Druck am ersten Druckanschluss 11. Über das Vorsteuerventil 3 kann der Druck im Steuerraum 10 auf ein Druckniveau abgesenkt werden, das zwischen dem Druck am zweiten Druckanschluss 12 und dem Druck am ersten Druckanschluss 11 liegt. Die Kräftebilanz der auf das Dichtelement 6 wirkenden hydraulischen Kräfte ist so ausgelegt, dass das Hauptventil 2 bei der Absenkung des Drucks im Steuerraum 10 durch das Vorsteuerventil 3 eine öffnende Kraft auf das Dichtelement 6 erzeugt.

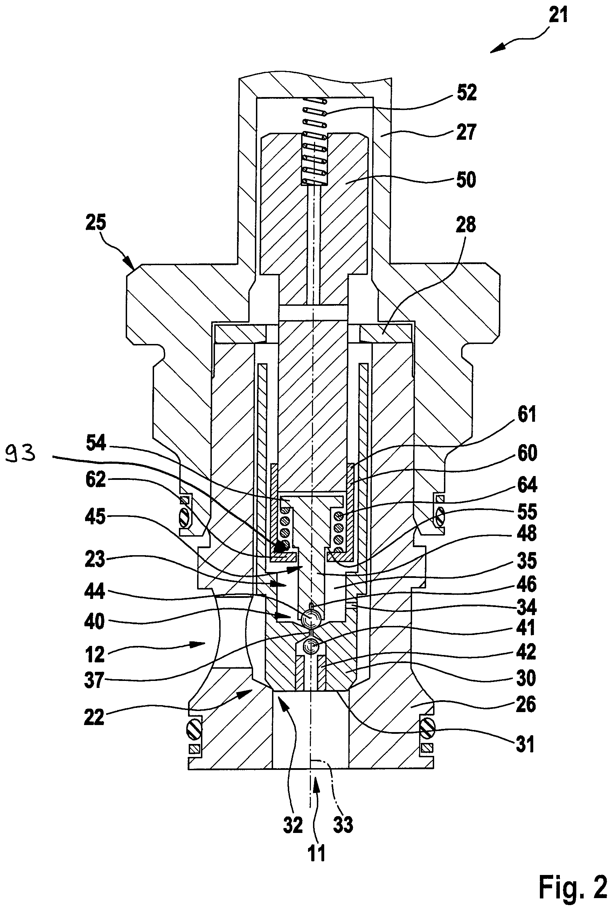

In Figur 2 ist eine Ventileinrichtung 21 mit einem Hauptventil 22 und einem Vorsteuerventil 23 gemäß dem Folgekolbenprinzip im Längsschnitt dargestellt. Die Ventileinrichtung 21 umfasst ein Ventilgehäuse 25 mit einem ersten Druckanschluss 11 und einem zweiten Druckanschluss 12, wie bei der in Figur 1 dargestellten Ventileinrichtung 1.

Das Ventilgehäuse oder Polrohr 25 umfasst einen Gehäusekörper 26 und einen Gehäusekörper oder Polrohrkörper 27. Die beiden Gehäusekörper 26, 27 sind druckdicht verbaut. Zwischen den beiden Gehäusekörpern 26, 27 ist eine Einstellscheibe 28 eingespannt, die einen Hub des Hauptventils 22 begrenzt.
Das Hauptventil 22 umfasst einen Ventilkolben 30, der an seinem unteren Ende 31 eine Dichtfläche aufweist, die zur Darstellung eines Ventilsitzes 32 an einer Dichtkante des Gehäusekörpers 26 dichtend anliegt. In Figur 2 ist der Ventilsitz 32 geschlossen.

Wenn der Ventilkolben 30 mit seiner Dichtfläche von der Dichtkante des Gehäusekörpers 26 abhebt, wird der Ventilsitz 32 geöffnet. Bei geöffnetem Ventilsitz 32 (nicht dargestellt) wird eine direkte Verbindung zwischen den beiden Druckanschlüssen 11 und 12 freigegeben. Diese Verbindung ist bei geschlossenem Ventilsitz 32 unterbrochen.

Der Ventilkolben 30 ist zur Darstellung der Öffnungsbewegung und der Schließbewegung in axialer Richtung, das heißt in Figur 2 nach oben und nach unten, bewegbar. Der Begriff axial bezieht sich auf eine Längsachse 33 der Ventileinrichtung 21.

Der Ventilkolben 30 weist ein sich in radialer Richtung, das heißt quer zur Längsachse 33, erstreckendes Durchgangsloch 34 auf, das den zweiten Druckanschluss 12 mit einem Steuerraum 35 im Inneren des Ventilkolbens 30 verbindet. Das Durchgangsloch 34 stellt eine gedrosselte Steuerraumzulauföffnung dar und wird daher auch als Zulaufdrossel bezeichnet.

Ein Durchgangsloch 37 erstreckt sich in axialer Richtung durch den Ventilkolben 30 und stellt eine gedrosselte Steuerraumablauföffnung dar. Daher wird das Durchgangsloch 37 auch als Ablaufdrossel bezeichnet.

Das Durchgangsloch 37 dient zur Darstellung eines Ventilsitzes 40 des Vorsteuerventils 23. Das Durchgangsloch 37 ist durch einen Rückschlagventilkörper, vorzugsweise in Form einer Rückschlagkugel, 41 in Figur 2 von unten verschließbar. Eine Bewegung des Rückschlagventilkörpers 41 in Figur 2 nach unten wird durch eine Hülse 42 begrenzt.

Nach oben ist das Durchgangsloch 37 in Figur 2 durch einen Schließkörper 44 verschlossen. Der Schließkörper 44 stellt zusammen mit dem Durchgangsloch 37 den Ventilsitz 40 des Vorsteuerventils 23 dar. Der Schließkörper 44 ist an einem in Figur 2 unteren Ende eines Dichtelements 45 des Vorsteuerventils 23 befestigt, zum Beispiel durch eine Bördelverbindung.

Das Dichtelement 45 stellt ein Ankerteil 48 dar, das relativ zu einem Anker 50 in axialer Richtung begrenzt bewegbar ist. Der Anker 50 ist durch eine Ankerfeder 52 in Figur 2 nach unten vorgespannt. Durch die Vorspannkraft der Ankerfeder 52 wird der über das Ankerteil 48 und den Schließkörper 44 mit dem Anker 50 gekoppelte Ventilkolben 30 in seine dargestellte Schließstellung bewegt beziehungsweise in der dargestellten Schließstellung gehalten, wenn eine dem Anker 50 zugeordnete Magneteinrichtung nicht bestromt ist.

An dem in Figur 2 unteren Ende des Ankerteils 48 ist der Schließkörper 44 befestigt. Das in Figur 2 obere Ende des Ankerteils 48 weist einen Bund 54 auf. In axialer Richtung zwischen dem Bund 54 und dem Schließkörper 44 weist das Ankerteil 48 einen Absatz 55 auf.

Das Ankerteil 48 beziehungsweise das Dichtelement 45 ist über eine Mitnehmereinrichtung 60 mit dem Anker 50 gekoppelt. Die Mitnehmereinrichtung 60 ist als Mitnehmerhülse ausgeführt, die mit einem ersten Ende 61, dem in Figur 2 oberen Ende, fest mit dem Anker 50 verbunden ist. Ein zweites Ende 62, das in Figur 2 untere Ende, der Mitnehmereinrichtung 60 weist radial nach innen umgebogene Mitnehmerklauen auf, die einen Anschlag für das Ankerteil 48, insbesondere den Absatz 55 des Ankerteils 48, darstellen.

Eine Federeinrichtung 64 ist in axialer Richtung zwischen den Mitnehmerklauen am zweiten Ende 62 der Mitnehmereinrichtung 60 und dem Bund 54 des Ankerteils 48 beziehungsweise Dichtelements 45 vorgespannt. Wenn die Magneteinrichtung (nicht dargestellt) der Ventileinrichtung 21 bestromt wird, dann wird der Anker 50 entgegen der Vorspannkraft der Ankerfeder 52, in Figur 2 nach oben, gezogen.

Bei entsprechender Druckdifferenz zwischen dem zweiten Druckanschluss 12 und dem ersten Druckanschluss 11 wird der Schließkörper 44 des Vorsteuerventils 23 in seiner dargestellten Schließstellung gehalten. Durch die feste Verbindung zwischen dem Schließkörper 44 und dem Ankerteil 48 verbleibt das Ankerteil 48 zunächst ebenfalls in seiner dargestellten Schließstellung.

Die Mitnehmereinrichtung 60 bewegt sich dann zusammen mit dem Anker 50 entgegen der Vorspannkraft der Federeinrichtung 64 in Figur 2 nach oben, bis das zweite Ende 62 der Mitnehmereinrichtung 60 an dem Absatz 55 des Ankerteils 48 anschlägt. Diese Bewegung des Ankers 50 ohne das Ankerteil 48 wird auch als Ankerfreiweg 93 bezeichnet.

Bei einer weiteren Bewegung des Ankers 50 nach oben sorgt die Mitnehmereinrichtung 60 dafür, dass das Ankerteil 48 mit nach oben bewegt wird, so dass der Schließkörper 44 aus dem Ventilsitz 40 gerissen wird. Das damit verbundene Öffnen in der Ablaufdrossel 37 führt dazu, dass der Ventilkolben des Hauptventils 22 öffnet.

Das Schließen des Hauptventils 22 wird durch eine Unterbrechung der Bestromung des Vorsteuerventils 23 ausgelöst. Die Ankerfeder 52 und die Federeinrichtung 64 bringen den Anker 50 und das Ankerteil 48 in die Schließstellung. Dann schließt der Ventilkolben 30 des Hauptventils 22 druckabhängig.

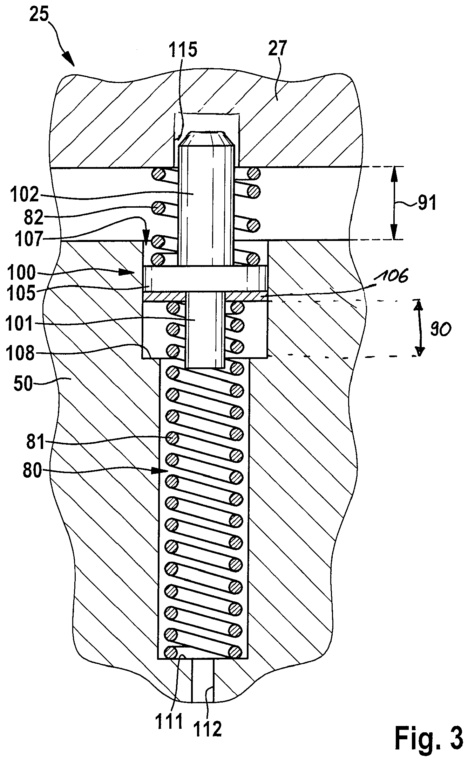

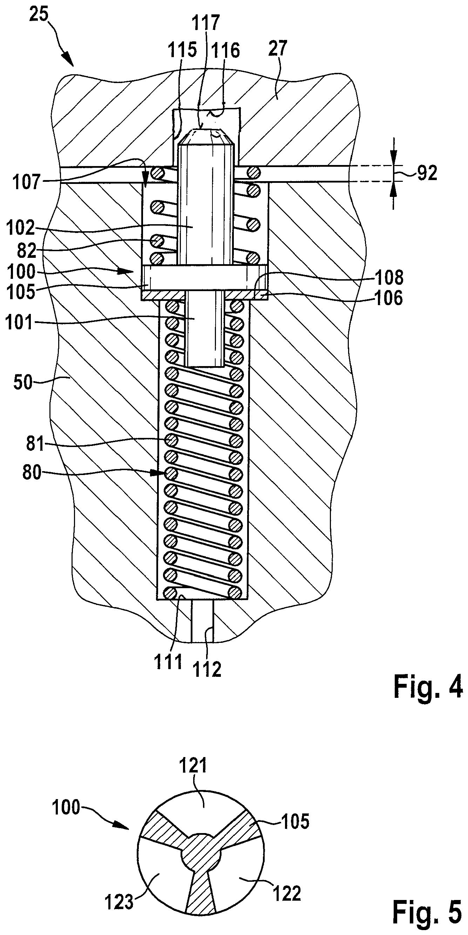

In den Figuren 3 und 4 sieht man, dass zwischen dem dem Schließkörper (44 in Figur 2) abgewandten Ende des Ankers 50 und dem Polkörper 27 des Polrohrs 25 eine Ankerfedereinrichtung 80 angeordnet ist. Die Ankerfedereinrichtung 80 umfasst eine erste Ankerfeder 81 und eine zweite Ankerfeder 82. In Figur 3 ist durch einen Doppelpfeil 91 ein unterer Ankerhub 91 angedeutet, den der Anker 50 entgegen einer ersten Federsteifigkeit der ersten Ankerfeder 81 ausführt. In Figur 4 ist durch Pfeile 92 ein oberer Ankerhub angedeutet, den der Anker 50 entgegen einer zweiten Federsteifigkeit der zweiten Ankerfeder 82 ausführt.

Die beiden Ankerfedern 81, 82 sind durch eine Kopplungseinrichtung 100 mechanisch miteinander gekoppelt. Die Kopplungseinrichtung 100 umfasst einen Führungszapfen 101 für die erste Ankerfeder 81 und einen Führungszapfen 102 für die zweite Ankerfeder 82. Zwischen den beiden Führungszapfen 101, 102 weist die Kopplungseinrichtung 100 einen Bund 105 auf, durch den die beiden Führungszapfen 101 und 102 einstückig miteinander verbunden sind. Der Bund 105 der Kopplungseinrichtung 100 ist mit einer Einstellscheibe 106 kombiniert.

Die Ankerfedereinrichtung 80 und die Kopplungseinrichtung 100 mit der Einstellscheibe 106 sind, in Abhängigkeit vom Ankerhub 90, mehr oder weniger in einer zentralen Aufnahme 107 des Ankers 50 aufgenommen. Der hier dargestellte Ankerhub 90 bezeichnet den Weg, den der Anker 50 vom geschlossenen Zustand der Ventileinrichtung 1 bis zur Mitnahme der Kopplungseinrichtung 100 zurücklegt. Die zentrale Aufnahme 107 in dem Anker 50 ist im Wesentlichen als Sackloch mit einem Absatz 108 ausgeführt. Der Absatz 108 stellt einen Anschlag für den Bund 105 mit der Einstellscheibe 106 dar. Über die Dicke der Einstellscheibe 106 kann die Größe des Ankerhubs 90, 91, 92 eingestellt werden. Der Ankerhub 90 ist erfindungsgemäß größer als der Ankerfreiweg 93 eingestellt Der Bund 105 mit der Einstellscheibe 106 ist zwischen den beiden Ankerfedern 81 und 82 der Ankerfedereinrichtung 80 eingespannt. Das in den Figuren 3 und 4 untere Ende der ersten Ankerfeder 81 ist gegen einen Federanschlag 111 am unteren Ende der zentralen Aufnahme 107 in dem Anker 50 vorgespannt. Von dem Federanschlag 111 geht ein Durchgangsloch 112 aus, das den Durchtritt von Fluid beim Hin- und Herbewegen des Ankers 50 ermöglicht.

Das in den Figuren 3 und 4 obere Ende 117 der zweiten Ankerfeder 82 ist gegen den Polkörper 27 des Polrohrs 25 vorgespannt. Ein freies Ende des Führungszapfens 102 für die zweite Ankerfeder 82 ist in einer Zentrieraufnahme 115 aufgenommen, die als Sackloch in dem Polkörper 27 des Polrohrs 25 ausgeführt ist. Der Boden des Sacklochs beziehungsweise der Zentrieraufnahme 115 stellt einen Endanschlag 116 für das in den Figuren 3 und 4 obere Ende 117 des Führungszapfens 102 dar.

In Figur 5 ist ein Querschnitt durch den Bund 105 der Kopplungseinrichtung 100 aus den Figuren 3 und 4 dargestellt. Anders als in den Figuren 3 und 4 dargestellt, umfasst der Bund 105 zum Beispiel drei Durchgänge 121, 122, 123, die einen axialen Durchtritt von Fluid im Betrieb, insbesondere bei einer Hin- und Herbewegung des Ankers 50, der Ventileinrichtung ermöglichen. Die Durchgänge 121 bis 123 werden zum Beispiel durch Stege realisiert, die den Bund 105 darstellen.

Die erste Ankerfeder 81 hat zum Beispiel eine Ersatzfederkonstante von etwa acht Newton pro Millimeter. Diese niedrige Ersatzfederkonstante ist im Bereich des unteren Ankerhubs 91 wirksam, bis der Absatz 108 des Ankers 50 an der Einstellscheibe 106 des Bundes 105 der Kopplungseinrichtung 100 anschlägt. Danach ist im Bereich des oberen Ankerhubs 92 eine Federkonstante von etwa vierzig Newton pro Millimeter der zweiten Ankerfeder 82 wirksam. Das führt zu einer Erhöhung der zur Verfügung stehenden Ankerfederschließkraft.

## Patentansprüche

1. Ventileinrichtung (1;21) mit einem Hauptventil (2;22) und einem Vorsteuerventil (3;23), das einen Schließkörper (44) umfasst, der mit einem Anker (50) betätigbar ist, um einen ersten Druckanschluss (11) der Ventileinrichtung (1;21) mit einem zweiten Druckanschluss (12) der Ventileinrichtung (1;21) zu verbinden, wobei der Anker (50) an einem dem Schließkörper (44) des Vorsteuerventils (3;23) abgewandten Ende durch eine Ankerfedereinrichtung (80) beaufschlagt ist, die in einer axialen Richtung zwischen einem Polrohr (25) und dem Anker (50) eingespannt ist, wobei der Anker (50) ein Ankerteil (48) aufweist, das nach einem Ankerfreiweg (93) über eine Mitnehmereinrichtung (60) des Ankers (50) betätigbar ist, **dadurch gekennzeichnet, dass** die Ankerfedereinrichtung (80) mindestens zwei Ankerhubbereiche (91,92) mit zwei unterschiedlichen Federsteifigkeiten darstellt.

2. Ventileinrichtung nach Anspruch 1, **dadurch gekennzeichnet, dass** mindestens zwei Ankerfedern (81,82) so in Reihe geschaltet sind, dass der durch die Ankerfedereinrichtung (80) in eine Schließstellung vorgespannte Anker (50) bei einer Betätigung zunächst einen unteren Ankerhub (91) gegen eine erste Federsteifigkeit einer ersten Ankerfeder (81) ausführt.

3. Ventileinrichtung nach einem der vorhergehenden Ansprüche, **dadurch gekennzeichnet, dass** die Ankerfedern (81,82) so in Reihe geschaltet sind, dass der Anker (50) nach dem unteren Ankerhub (91) einen oberen Ankerhub (92) gegen eine zweite, größere Federsteifigkeit einer zweiten Ankerfeder (82) ausführt.

4. Ventileinrichtung nach Anspruch 3, **dadurch gekennzeichnet, dass** die erste Ankerfeder (81) durch eine Kopplungseinrichtung (100) mechanisch mit der zweiten Ankerfeder (82) gekoppelt ist.

5. Ventileinrichtung nach Anspruch 4, **dadurch gekennzeichnet, dass** die Kopplungseinrichtung (100) einen Bund (105) aufweist, der zwischen den Ankerfedern (81,82) eingespannt ist.

6. Ventileinrichtung nach Anspruch 5, **dadurch gekennzeichnet, dass** der Anker (50) zur Aufnahme der Ankerfedereinrichtung (80) eine zentrale Aufnahme (107) mit einem Absatz (108) aufweist, der nach Erreichen eines Ankerhubs (90) einen mechanischen Anschlag für den Bund (105) der Kopplungseinrichtung (100) darstellt.

7. Ventileinrichtung nach Anspruch 6, **dadurch gekennzeichnet, dass** der Ankerfreiweg (93) kleiner ist als der Ankerhub (90) zur Mitnahme der Kopplungseinrichtung (100) durch den Anker (50).

8. Ventileinrichtung nach einem der Ansprüche 6 oder 7, **dadurch gekennzeichnet, dass** eine Einstellscheibe (106) zwischen dem Bund (105) der Kopplungseinrichtung (100) und dem Absatz (108) an dem Anker (50) angeordnet ist.

9. Ventileinrichtung nach einem der Ansprüche 4 bis 8, **dadurch gekennzeichnet, dass** die Kopplungseinrichtung (100) für die zweite Ankerfeder (82) einen Führungszapfen (102) aufweist, der mit einem freien Ende in einer Zentrieraufnahme (115) des Polrohrs (25) angeordnet ist.

10. Ventileinrichtung nach einem der vorhergehenden Ansprüche, **dadurch gekennzeichnet, dass** die Ventileinrichtung (1;21) als Hauptstromventil (2;22) für einen Hydraulikhybridantriebsstrang ausgeführt ist.

## Claims

1. Valve device (1; 21) having a main valve (2; 22) and a pilot control valve (3; 23) which comprises a closing body (44) which can be actuated by way of an armature (50), in order to connect a first pressure connector (11) of the valve device (1; 21) to a second pressure connector (12) of the valve device (1; 21), the armature (50) being loaded by way of an armature spring device (80) at an end which faces away from the closing body (44) of the pilot control valve (3; 23), which armature spring device (80) is clamped in between a pole tube (25) and the armature (50) in an axial direction, the armature (50) having an armature part (48) which can be actuated via a driver device (60) of the armature (50) after an armature free travel (93), **characterized in that** the armature spring device (80) produces at least two armature stroke regions (91, 92) with two different spring stiffnesses.

2. Valve device according to Claim 1, **characterized in that** at least two armature springs (81, 82) are connected in series in such a way that, in the case of an actuation, the armature (50) which is prestressed into a closed position by way of the armature spring device (80) first of all carries out a lower armature stroke (91) against a first spring stiffness of a first armature spring (81).

3. Valve device according to either of the preceding claims, **characterized in that** the armature springs (81, 82) are connected in series in such a way that, after the lower armature stroke (91), the armature (50) carries out an upper armature stroke (92) against a second, greater spring stiffness of a second armature spring (82).

4. Valve device according to Claim 3, **characterized in that** the first armature spring (81) is coupled mechanically to the second armature spring (82) by way of a coupling device (100).

5. Valve device according to Claim 4, **characterized in that** the coupling device (100) has a collar (105) which is clamped in between the armature springs (81, 82).

6. Valve device according to Claim 5, **characterized in that**, in order to receive the armature spring device (80), the armature (50) has a central receptacle (107) with a shoulder (108) which, after an armature stroke (90) is reached, provides a mechanical stop for the collar (105) of the coupling device (100).

7. Valve device according to Claim 6, **characterized in that** the armature free travel (93) is smaller than the armature stroke (90) for driving the coupling device (100) by way of the armature (50).

8. Valve device according to either of Claims 6 and 7, **characterized in that** an adjustment disc (106) is arranged on the armature (50) between the collar (105) of the coupling device (100) and the shoulder (108).

9. Valve device according to one of Claims 4 to 8, **characterized in that** the coupling device (100) has a guide pin (102) for the second armature spring (82), which guide pin (102) is arranged with a free end in a centring receptacle (115) of the pole tube (25).

10. Valve device according to one of the preceding claims, **characterized in that** the valve device (1; 21) is configured as a main flow valve (2; 22) for a hydraulic hybrid drive train.

## Revendications

1. Système de soupapes (1 ; 21) pourvu d'une soupape principale (2 ; 22) et d'une soupape pilote (3 ; 23), qui comprend un organe de fermeture (44), lequel est actionnable à l'aide d'une ancre (50) pour relier un premier raccord de pression (11) du système de soupapes (1 ; 21) avec un deuxième raccord de pression (12) du système de soupapes (1 ; 21), sur une extrémité opposée à l'organe de fermeture (44) de la soupape pilote (3 ; 23) l'ancre (50) étant soumise à un système de ressort d'ancre (80) qui est enserré dans une direction axiale entre un tube polaire (25) et l'ancre (50), l'ancre (50) comportant une partie d'ancre (48) qui après une course libre d'ancre (93) est actionnable par l'intermédiaire d'un système d'entraîneur (60) de l'ancre (50), **caractérisé en ce que** le système de ressort d'ancre (80) représente au moins deux zones de course d'ancre (91, 92) avec deux différentes rigidités de ressort.

2. Système de soupapes selon la revendication 1, **caractérisé en ce qu'**au moins deux ressorts d'ancre (81, 82) sont montés en série de telle sorte que l'ancre (50) précontrainte dans une position de fermeture par le biais du système de ressort d'ancre (80), lors d'un actionnement, effectue d'abord une course d'ancre (91) inférieure contre une première rigidité de ressort d'un premier ressort d'ancre (81) .

3. Système de soupapes selon l'une quelconque des revendications précédentes, **caractérisé en ce que** les ressorts d'ancre (81, 82) sont montés en série de telle sorte qu'après la course d'ancre (91) inférieure, l'ancre (50) effectue une course d'ancre (92) supérieure contre une deuxième rigidité de ressort plus importante d'un deuxième ressort d'ancre (82).

4. Système de soupapes selon la revendication 3, **caractérisé en ce que** le premier ressort d'ancre (81) est accouplé mécaniquement avec le deuxième ressort d'ancre (82) par un système d'accouplement (100) .

5. Système de soupapes selon la revendication 4, **caractérisé en ce que** le système d'accouplement (100) comporte un collet (105) qui est enserré entre les ressorts d'ancre (81, 82).

6. Système de soupapes selon la revendication 5, **caractérisé en ce que** pour réceptionner le système de ressort d'ancre (80), l'ancre (50) comporte un logement central (107) pourvu d'un talon (108) qui après l'atteinte d'une course d'ancre (90) fait office d'une butée mécanique pour le collet (105) du système d'accouplement (100).

7. Système de soupapes selon la revendication 6, **caractérisé en ce que** la course libre d'ancre (93) est inférieure à la course d'ancre (90) pour l'entraînement du système d'accouplement (100) par l'ancre (50).

8. Système de soupapes selon l'une quelconque des revendications 6 ou 7, **caractérisé en ce qu'**une rondelle de réglage (106) est placée entre le collet (105) du système d'accouplement (100) et le talon (108) sur l'ancre (50).

9. Système de soupapes selon l'une quelconque des revendications 4 à 8, **caractérisé en ce que** le système d'accouplement (100) pour le deuxième ressort d'ancre (82) comporte un tenon de guidage (102), qui par une extrémité libre est placé dans un logement de centrage (115) du tube polaire (25).

10. Système de soupapes selon l'une quelconque des revendications précédentes, **caractérisé en ce que** le système de soupapes (1 ; 21) est réalisé en tant que soupape de flux principal (2 ; 22) pour une chaîne cinématique hydraulique hybride.
